# FASCICULE DE BREVET EUROPEEN

(11) **EP 2 176 367 B1**
(45) Date de publication et mention de la délivrance du brevet: **25.07.2018**
(21) Numéro de dépôt: 08761202.4
(22) Date de dépôt: 19.06.2008
(51) Int. Cl.: C09D 183/04, B05D 5/08, C09D 7/65

(54) **PROCÉDÉ DE LUTTE CONTRE L'APPARITION DE BROUILLARD LORS DE L'ENDUCTION DE SUPPORTS FLEXIBLES AVEC UNE COMPOSITION SILICONE LIQUIDE RÉTICULABLE, DANS UN DISPOSITIF A CYLINDRES**
VERFAHREN ZUR EINDÄMMUNG VON SPRÜHNEBEL BEI DER BESCHICHTUNG VON FLEXIBLEN TRÄGERN MIT EINER VERNETZBAREN FLÜSSIGSILICON-ZUSAMMENSETZUNG IN EINER VORRICHTUNG MIT WALZEN
PROCESS FOR REDUCING THE APPEARANCE OF MIST DURING THE COATING OF FLEXIBLE SUPPORTS WITH A CROSSLINKABLE LIQUID SILICONE COMPOSITION IN A ROLL DEVICE

(30) Priorité: 21.06.2007 FR 0704442
(43) Date de publication de la demande: 21.04.2010
(73) Titulaire: ELKEM SILICONES France SAS, 69003 Lyon (FR)
(72) Inventeur: MARTIN, Nadia, F-69006 Lyon (FR); IRELAND, Tania, F-69002 Lyon (FR); FRANCES, Jean-Marc, 69330 Meyzieu (FR); DERUELLE, Martial, 69440 Mornant (FR); MAADADI, Yassine, F-69150 DECINES (FR)
(86) Numéro de dépôt international: PCT/EP2008/057759
(87) Numéro de publication internationale: WO 2008/155374

(56) Documents cités:
- EP-A- 0 601 938
- EP-A- 1 783 186
- WO-A-02/50202
- WO-A-03/074621
- WO-A2-2005/063890
- US-A1- 2005 020 764

## Description

L'invention se rapporte au domaine général de l'enduction silicone sur cylindres à grande vitesse de supports flexibles divers, tels que les feuilles de papier ou de polymère synthétique (polyoléfine, polyester...), ou bien encore de textile.

Plus précisément, l'invention concerne l'enduction de matériaux flexibles avec des compositions liquides contenant un ou plusieurs polyorganosiloxanes réticulables par polyaddition, par déshydrogénocondensation, par polycondensation, par voie cationique ou par voie radicalaire de façon à former un film ou revêtement protecteur ayant notamment des propriétés d'anti-adhérence et/ou hydrophobes.

Les supports flexibles peuvent être des papiers, des cartons, des films plastiques, ou des films métalliques. Les applications de ces supports enduits de silicone sont par exemple : papier alimentaire (moules à pâtisserie, emballage), étiquette/ruban adhésif, joint, etc...

L'enduction de ces supports flexibles avec des silicones liquides réticulables est réalisée sur des dispositifs d'enduction fonctionnant en continu, et à très grande vitesse. Ces dispositifs comportent des têtes d'enduction constituées de plusieurs cylindres dont notamment un cylindre presseur et un cylindre enducteur, lequel est alimenté en continu en composition silicone liquide réticulable, au moyen d'une série de cylindres accolés les uns aux autres. La bande de support flexible circule à grande vitesse entre le cylindre presseur et le cylindre enducteur pour être enduite sur au moins une de ses faces d'un film silicone destiné à réticuler par l'intermédiaire de moyens de réticulation disposés en aval de la tête d'enduction. Ces moyens de réticulation peuvent être des émetteurs de chaleur, de radiations (e.g.ultraviolet) ou de faisceaux d'électrons par exemple.

Dans la course à la productivité, les fabricants de supports flexibles revêtus de silicone anti-adhérent sont demandeurs de formulations silicone liquides d'enduction, adaptées à des vitesses linéaires de défilement de la bande de supports flexibles de plus en plus élevées. Le facteur économique n'est évidement pas anodin dans cette recherche de nouvelles formulations silicone pour enduction à grande vitesse.

Or, on sait que les grandes vitesses sur des machines d'enduction en continu, sont synonymes de problèmes de transfert du film liquide silicone du cylindre enducteur sur la bande de support flexible défilante. Ces problèmes de transfert ("splitting") se traduisent notamment par l'apparition d'un brouillard ou d'un aérosol ("misting", "fogging") dans l'environnement de la tête d'enduction et, plus particulièrement, au niveau des contacts entre les cylindres en rotation et/ou entre le cylindre enducteur et le support flexible à enduire. La densité de ce brouillard ou de cet aérosol augmente lorsque la vitesse linéique de défilement et donc la vitesse de rotation des cylindres augmente.

Ce phénomène a pour conséquence tout d'abord une perte de consommable, et surtout un dépôt de gouttelettes de liquide d'enduction sur le support en aval (par exemple au niveau du four), ce qui nuit gravement à la qualité du revêtement.

En outre, cette formation indésirable de brouillard a des conséquences néfastes sur le plan de l'hygiène industrielle et de la sécurité des opérateurs, qui sont exposés au voisinage du dispositif d'enduction à cylindres, à une forte teneur en aérosol. Cela peut s'avérer nocif.

Par ailleurs, le "misting" provoque l'encrassement rapide du dispositif d'enduction à cylindres, d'où des contraintes d'entretien et une usure prématurée.

Pour se prémunir des conséquences de ce brouillard, on dispose en général autour de la tête d'enduction, un système d'aspiration permettant de capter ledit brouillard.

Par ailleurs, l'homme du métier connaît un certain nombre de réglages de la tête d'enduction pour contrecarrer ce phénomène. On en citera quelques exemples ci-après :
A. baisser la vitesse au détriment de la productivité ;
B. diminuer le taux de dépôt de silicone au détriment des propriétés du support flexible siliconé que l'on cherche à obtenir (aspect, couverture, anti-adhérence, propriétés mécaniques) ;
C. augmentation de la différence entre la vitesse tangentielle du cylindre enducteur et la vitesse linéaire du papier. Mais au-delà d'un certain différentiel, l'homogénéité de la couche enduite est gravement perturbée. De plus, cela permet de réduire la densité du brouillard sans pour autant l'annihiler suffisamment pour permettre une augmentation significative de la vitesse d'enduction ;
D. augmentation de la pression entre le cylindre enducteur et le cylindre presseur; là encore dans une certaine limite et sans suppression intéressante du phénomène de formation de brouillard.

Une autre approche pour lutter contre la formation de brouillard dans les machines d'enduction à cylindres, consiste à agir sur la formulation de la composition silicone liquide d'enduction.

Selon cette approche, il est connu de réduire le degré de polymérisation moyen en nombre des polyorganosiloxanes constituant le liquide d'enduction silicone et, par voie de conséquence, de réduire la viscosité du bain d'enduction silicone pour limiter la densité du brouillard.

Ces méthodes connues souffrent d'un grave inconvénient qui est de modifier sensiblement les propriétés et, notamment, l'anti-adhérence du support flexible siliconé que l'on cherche à obtenir.

A titre d'illustration de cette approche au travers de la formulation silicone, on peut citer la demande de brevet internationale WO 2004/046248 qui décrit l'utilisation de polymères silicone en étoile utilisés en tant qu'additif anti-brouillard pour des applications de revêtement sur des supports flexibles. Le procédé de préparation de ces polymères silicones étoiles consiste à faire réagir (par hydrosilylation) de manière incomplète un polyorganosiloxane comprenant des motifs réactifs ≡SiH avec une oléfine à longue chaîne afin d'obtenir un polyhydrogénoorganosiloxane partiellement substituée que l'on fait ensuite réagir par hydrosilylation avec une résine silicone vinylée de type MQ et une dioléfine à longue chaîne. Il est clair que de telles compositions sont relativement complexes et donc coûteuses à obtenir. Par ailleurs, elles restent encore perfectibles en ce qui concerne la lutte contre la formation de brouillard dans l'enduction silicone sur cylindres, à grande vitesse.

Le brevet européen EP-0 716 115 décrit un procédé de fabrication d'une composition silicone d'enduction à grande vitesse avec des cylindres, cette composition étant présentée comme permettant la réduction de la densité de brouillard. Selon ce procédé, on met en oeuvre un polydiméthyl-méthylhydrogénosiloxane à extrémités triméthylsilyle de degré de polymérisation égale à 12, ainsi que 0,01% d'un polydiméthylsiloxane substitué par des fonctions perfluo-éthylbutyle et méthylvinyle, dont les extrémités sont du type diméthylvinylsiloxyle et de degré de polymérisation égale à 300, ainsi que du polypropylèneglycol et éventuellement un alcool stéarique ou oléique. Cela conduit à des polydiméthylsiloxanes fonctionnalisés par des groupements de polyoxy-propylène. Ces polydiméthylsiloxanes fonctionnalisés sont associés avec d'autres polydiméthylsiloxanes fonctionnalisés, e.g. par des motifs héxènyles ainsi qu'avec un catalyseur d'hydrosilylation à base de platine, pour former des compositions silicone d'enduction permettant de réduire la formation de brouillard. Les motifs de fonctionnalisation peuvent être des restes hydrophobes tels que des restes d'acide stéarique ou oléique.

Le brevet américain US-4 806 391 concerne des encres et des vernis à base de silicone, et plus précisément un procédé d'application de ces encres/vernis sur un substrat, à l'aide de machine d'enduction à rouleau fonctionnant à grande vitesse. Ce brevet divulgue notamment des compositions comprenant des polydiméthylsiloxanes à extrémités vinylées de viscosité à 25°C comprise entre 15000 et 50000 mPa.s. Ces compositions liquides d'enduction comprennent également un catalyseur à base de platine et un additif rhéologique constitué par de la silice à haute surface spécifique, en particulier de la silice de combustion.

Le brevet américain US-6 057 033 divulgue des compositions silicones destinées à être enduites sur des supports flexibles pour former après réticulation par voie cationique sous UV à un revêtement anti-adhérent. En plus des polyorganosiloxanes, ces compositions comprennent des fibres de cellulose ayant une longueur moyenne comprise entre 15 et 100 µm et une épaisseur moyenne comprise entre 5 et 40µm. Les polyorganosiloxanes mis en oeuvre sont des polyorganosiloxanes fonctionnalisés par des groupements de réticulation du type acryloxy ou méthacryloxy, permettant la réticulation par voie radicalaire sous UV.

Les fibres de cellulose incorporées dans la composition permettent d'apporter une solution au problème technique qui est d'obtenir un revêtement silicone anti-adhérent réticulé non cassant. Les fibres de cellulose sont présentées comme procurant des améliorations en ce qui concerne le transfert du film de silicone d'enduction sur le support, la résistance au découpage, les propriétés mécaniques (résistance à la tension et à la déchirure), la fixation du revêtement sur le papier, la diminution de l'absorption du liquide d'enduction au sein du papier, et accessoirement la réduction de la formation de brouillard.

Sur ce dernier point, le brevet US 6 057 033 ne fournit aucun élément quantitatif d'appréciation de la réduction de brouillard entraîné par les fibres cellulosiques. Il y a tout lieu de penser que cette réduction demeure tout à fait insuffisante.

On citera également pour mémoire la demande de brevet japonais JP-62 64 011 qui décrit un liquide d'enduction contenant une résine filmogène et un solvant et qui contient également des particules de cire de diamètre compris entre 1 et 10µm, le diamètre de la particule la plus grosse étant au plus égale à 150% de l'épaisseur du film humide de revêtement appliqué sur le support. Un tel liquide d'enduction permettrait un accroissement de la vitesse de revêtement d'au moins 10 à 30 m/min, a priori grâce à une limitation de la formation de brouillard. L'enseignement d'un tel document est à écarter car il ne concerne pas les revêtements silicone.

Dans un tel état de la technique, l'un des objectifs essentiels de l'invention est de proposer un procédé efficace de lutte contre l'apparition de brouillard lors de l'enduction de supports flexibles avec une composition silicone liquide précurseur de revêtements réticulés, cette enduction s'opérant à l'aide d'un dispositif d'enduction à cylindre fonctionnant à grande vitesse.

Un autre objectif essentiel de l'invention est de proposer un procédé économique et simple de lutte contre l'apparition de brouillard lors de l'enduction de supports flexibles avec une composition silicone destinée à réticuler, cette enduction s'opérant dans un dispositif d'enduction à cylindres fonctionnant à grande vitesse.

Un autre objectif essentiel de l'invention est de fournir une nouvelle composition silicone liquide X précurseur de revêtement(s) silicone ne présentant plus de formation de brouillard lors de l'enduction à grande vitesse sur cylindres.

Un autre objectif essentiel de l'invention est de proposer un procédé de lutte contre l'apparition de brouillard dans le cadre de l'enduction de supports flexibles, avec une composition silicone réticulable en revêtements anti-adhérents, à l'aide d'un dispositif d'enduction à cylindre.

Tous ces objectifs, parmi d'autres, sont atteints par la présente invention qui concerne tout d'abord un procédé de lutte contre l'apparition de brouillard ("misting") lors de l'enduction de supports flexibles comprenant les étapes **I)** et **II)** suivantes :
**I)** la préparation d'une composition silicone liquide **X** précurseur de revêtement(s) silicone comprenant :
   - au moins un polyorganosiloxane **A** réticulable par polyaddition, par déshydrogénocondensation, par polycondensation, par voie cationique ou par voie radicalaire,
   - éventuellement au moins un composé organosilicique réticulant **B,**
   - éventuellement au moins un catalyseur ou photoamorceur **C** dont la nature est choisie suivant le type de réaction envisagée pour ledit polyorganosiloxane **A,**
   - éventuellement, au moins un système modulateur d'adhérence **K,** et
   - éventuellement au moins un inhibiteur de réticulation **D;** et
II) l'enduction de ladite composition silicone liquide **X** sur un support flexible à l'aide d'un dispositif d'enduction à cylindres,
   ledit procédé étant caractérisé en ce qu'à l'étape **I)** on ajoute à ladite composition silicone liquide **X** un additif anti-brouillard **E** (additif « antimisting ») ayant les caractéristiques suivantes :
   - il se présente sous une forme liquide, éventuellement suite à une dilution à l'aide d'un diluant **J',** d'un solvant **J"** ou dans un des constituants de la dite composition silicone liquide **X,** et
   - il est susceptible d'être obtenu :
      1) en faisant réagir, de préférence à une température comprise entre 0°C et 200°C un ou plusieurs composés choisis parmi les composés a) à d) suivants :
         a) une résine organosilicique **F** (éventuellement diluée à l'aide d'un diluant **J',** d'un solvant **J"** ou dans un des constituants de la dite composition silicone liquide **X)** comprenant dans sa structure, au moins deux motifs siloxyles différents choisis parmi ceux de formule:
            - (R¹hSiO_{1/2} (motif M),
            - (R¹)₂SiO_{2/2} (motif D),
            - R¹SiO_{3/2} (motif T), et
            - SiO_{4/2} (motif Q),
            motifs dans lesquels:
            - les radicaux R¹, identiques ou différents, sont choisis parmi les radicaux alkyles linéaires ou ramifiés en C₁ à C₆, les radicaux alcényles en C₂ à C₄, phényle, trifluoro-3,3,3 propyle, avec comme conditions:
               - que l'un au moins de ces motifs est un motif T ou Q, et
               - que ladite résine organosilicique **F** comprend des groupes ≡SiOH et/ou =SiOR², la teneur pondérale en groupes OH et/ou OR² étant comprise entre 0,2 et 10 % en poids, avec R² étant un radical alkyle linéaire ou ramifié en C₁ à C₆,
         b) un composé organosilicié **N** de formule générale:

            R³_{d} Si X_{4-d}

            dans laquelle R³ est un groupe hydrocarboné monovalent ayant de 1 à 5 atomes de carbone, X est un groupe hydrolysable et d a une valeur moyenne ≤ 1 ;
         c) un condensat **L** partiellement hydrolysé dudit organosilicié **N;**
         d) un condensat **M** de ladite résine organosilicique **F** avec ledit composé organosilicié **N** ou ledit condensat **L** ;

         - avec:
            e) au moins un monomère, oligomère et/ou polymère organosiloxane **G** présentant, par molécule, au moins un motif réactif ≡SiOH et/ou ≡SiR; avec R étant un radical carbinol en C₁-C₄₀,
         - en présence :
            - d'au moins un catalyseur de polycondensation **H,**
            - d'éventuellement une charge **Z,** et
            - d'éventuellement au moins un diluant **J'** ou un solvant **J",** et
      2) en isolant l'additif anti-brouillard **E,** éventuellement après élimination du catalyseur de condensation **H** et/ou dévolatilisation et/ou neutralisation.

Comme exemple de résine organosilicique **F** on peut citer les résines organosiliciques préparées par cohydrolyse et/ou cocondensation d'alkoxysilanes par des méthodes connues par l'homme du métier ou de chlorosilanes choisis dans le groupe constitué de ceux de formules (R¹)₃SiCl, (R¹)₂Si(Cl)₂, R¹Si(Cl)₃, Si(Cl)₄. Ces résines sont des oligomères ou polymères organopolysiloxanes ramifiés bien connus et disponibles dans le commerce. Elles présentent, dans leur structure, au moins deux motifs siloxyles différents choisis parmi ceux de formule (R¹)₃SiO_{0,5} (motif M), (R¹)₂SiO (motif D), R¹SiO_{1,5} (motif T) et SiO₂ (motif Q), l'un au moins de ces motifs étant un motif T ou Q. Les radicaux R¹ sont répartis de telle sorte que les résines comportent environ 0,8 à 1,8 radicaux R¹ par atome de silicium. De plus ces résines ne sont pas complètement condensées et elles possèdent encore environ de 0,001 à 1,5 groupes OH et/ou alkoxyle OR² par atome de silicium. Les radicaux R¹ et R² sont tels que définis ci-dessus.

Comme exemples de résine organosilicique **F** on peut citer les résines MQ, les résines MDQ, les résines TD et les résines MDT, M^{Vinyl}Q, MD^{Vinyl}Q, QQ^{OH} les groupes OH et/ou OR² pouvant être portées par les motifs M, D et/ou T, la teneur pondérale en groupes OH et/ou OR² étant comprise entre 0,2 et 10 % en poids.

Comme exemples de composés organosiliciés N on peut citer le groupe constitué par: CH₃Si(OCH₃)₃, CH₃Si(OC₂H₅)₃, (CH₂= CH)Si(OCH₃)₃, C₆H₅Si(OC₂H₅)₃, Si(OC₂H₅)₄, Si(OC₃H₇)₄, (CH₂= CH)Si(OC₂H₅)₃ et Si(OC₂H₄ OC₂H₅)₄.

L'organosiloxane **G** est un polydiméthylsiloxane linéaire ayant au moins un motif ≡SiOH bout de chaîne. Le composant G est de formule: 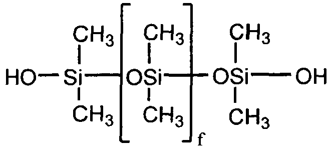 dans laquelle: 1 ≤ f ≤ 2000, de préférence 1 ≤ f ≤ 1000.

Les conditions définis dans le mode de préparation de l'additif anti-brouillard **E** (additif « antimisting »), c'est-à-dire la nature de la réaction (réaction de condensation) permet d'obtenir un additif se présentant sous une forme liquide présentant des propriétés anti-brouillard en tout point remarquable. Sans vouloir se limiter à une théorie scientifique ou à un mécanisme, il semble que cette propriété de l'additif anti-brouillard **E** selon l'invention est due à la nature de la réaction mise en jeu (réaction de condensation) qui permettent d'obtenir des polymères branchés présentant des propriétés viscoélastiques, utiles pour lutter contre l'apparition de brouillard dans un système d'enduction à cylindre fonctionnant à grande vitesse. Ces propriétés viscoélastiques se caractérisent par un aspect filant de l'additif anti-brouillard **E.**

L'additif anti-brouillard **E** selon l'invention est mis en oeuvre dans des quantités suffisantes pour réduire la quantité de misting lors de l'enduction. Bien entendu l'homme de métier, par des essais de routine, peut déterminer sans difficulté ces quantités. Par exemple, il peut mettre en oeuvre l'additif selon l'invention dans des quantités comprises entre, 0,1 à 15 parties en poids par rapport au poids total de la composition silicone liquide **X** précurseur de revêtement(s) silicone.

Par « condensation » on entend une réaction entre des motifs ≡SiOH (ou ≡SiOR) et conduit à la formation de liaisons siloxyle ≡Si-O-Si≡ et à la libération d'eau (ou d'alcool). Cette réaction est catalysée par une quantité efficace d'un catalyseur de condensation **H.**

L'homme du métier saura déterminer la quantité efficace du catalyseur de condensation **H** suivant le type de catalyseur utilisé. Par quantité efficace, on entend, au sens de l'invention, la quantité suffisante pour amorcer la réaction. Cette quantité est de préférence déterminée de manière à ce qu'elle soit la plus faible possible afin de permettre une meilleure conservation dans le temps de la composition. Des concentrations utiles en catalyseur se situent entre 1.10⁻⁶ et 5, de préférence entre 1.10⁻⁵ et 2 parties en poids par rapport au poids de la matière sèche en polymère organosiloxane à faire réagir. Tout catalyseur susceptible d'initier une réaction de condensation pourra convenir. Les catalyseurs de condensation ou de polycondensation sont généralement des composés d'un métal choisi parmi l'étain, le titane et le zirconium. On peut ainsi utiliser les monocarboxylates et les dicarboxylates d'étain tels que l'éthyl-2 hexanoate d'étain, le dilaurate de dibutylétain, le diacétate de dibutylétain, les chélates d'étain de valence IV hexacoordinés, etc., tels que ceux décrits dans EP-A-0 367 69 ou ceux cités aux pages 205 et 307 de l'ouvrage « Chemistry and technology of silicones », de NOLL, Academic Press, 1968 - 2ème édition).

On peut aussi utiliser:
- des catalyseurs basiques tels que par exemple: la potasse KOH, les siliconates de potassium, les phosphazènes, les carbènes, l'association de KOH et de cryptant tel que le krytpofix, ou
- des catalyseurs acides tels que : l'acide chlorhydrique, l'acide sulfurique, l'acide trifluoromethanesulfonique, le Tonsil® et les résines sulfoniques de type Amberlyst®.

L'inhibiteur de réticulation **D** est en général utilisé pour conférer à la composition prête à l'emploi, une certaine durée de vie en pot (« pot-life »). En jouant d'une part sur la nature de l'ensemble catalytique et sur sa concentration dans la composition (dont il découle une vitesse de réticulation donnée) et d'autre part sur la nature du retardateur et sur sa concentration, il est possible d'ajuster la durée de vie en pot. L'activité de l'ensemble catalytique est restituée par chauffage (thermoactivation).

L'inhibiteur de réticulation **D** est de préférence choisi parmi les alcools acétyléniques (éthynylcyclohexanol : ECH), les diallylmaléates, les triallylisocyanurates, les dialkylmaléates (diéthylmaléates ou dialkylalcinyledicarboxylates) (diéthyleacéthylène dicarboxylate) ou bien encore parmi les polyorganosiloxanes, avantageusement cycliques et substitués par au moins un alcényle, le tétraméthylvinylcyclotétrasiloxane étant particulièrement préféré, ou les maléates alkylés.

Les alcools acétyléniques (voir par exemple FR-B-1 528 464 et FR-A-2 372 874) sont des retardateurs utiles selon l'invention. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1propyne-2ol-1 ;
- l'éthyl-3éthyl-6 nonyne-1ol-3 ;
- le méthyl-3pentadécyne-1ol-3.

Ces alcools α-acétyléniques sont des produits du commerce.

Dans la composition silicone liquide **X** précurseur de revêtement(s) silicone, il peut-être avantageux de mettre en oeuvre au moins un système modulateur d'adhérence **K,** pour permettre le contrôle des propriétés anti-adhérence du revêtement silicone réticulé.

A titre d'illustration de système modulateur d'adhérence **K** dans des formulations silicones pour anti-adhérence papier ou ruban adhésif ayant un support polymère, on peut citer la demande de brevet européen EP-A-0 601 938, dont le contenu est intégralement inclus dans le présent exposé.

Selon une variante, le système modulateur d'adhérence **K** est :
- dans le cas d'une formulation réticulant par polyaddition : une résine polyorganosiloxane de formule MD^{Vi}Q ; MM^{Vi}Q ; MM^{Vi}D^{Vi}Q ; MM^{Vi}DD^{Vi}Q ; MD^{H}Q ou MM^{H}Q (avec Vi= groupement vinyle)
- dans le cas d'une formulation réticulant par polycondensation : une résine polyorganosiloxane de formule M^{OH}Q, et
- dans le cas d'une formulation réticulant sous rayonnement : une résine polyorganosiloxane de formule MD^{H}Q ou MM^{H}Q.

A titre d'exemples de diluant et/ou de solvant J' et J" on peut citer, les solvants aliphatiques, aromatiques, les solvants chlorés, e.g. : white spirit, les cétones telles que la méthyléthylcétone et l'acétone, les alcools tels que l'isopropanol et l'alcool n-butylique, les hydrocarbures saturés, insaturés ou aromatiques, avantageusement le pentane, l'hexane, l'heptane, l'octane, le toluène, le xylène, le benzène, les coupes pétrolières "naphtas"; les coupes pétrolières en C₇-C₈, des polysiloxanes non réactif pour une réaction de condensation tels que des polydiméthylsiloxanes, les hydrocarbures halogénés et leurs mélanges.

Concernant les polyorganosiloxanes A de la composition silicone liquide X précurseur de revêtement(s) silicone, ils peuvent être du type de ceux qui réticulent à température ambiante ou à la chaleur par des réactions de polyaddition en présence d'un catalyseur métallique en l'occurrence à base de platine. Ce sont des compositions de polyorganosiloxanes réticulables appelées RTV ("Room Température Vulcanising") ou des compositions polyorganosiloxaniques de polyaddition dénommées EVC qui est l'abréviation de "élastomère vulcanisable à chaud".

Les compositions polyorganosiloxaniques bicomposantes ou monocomposantes RTV ou EVC de polyaddition, durcissent ou réticulent essentiellement par des réactions de groupements hydrogénosilylés sur des groupements alkényles silylés, en présence généralement d'un catalyseur métallique (de préférence au platine). Elles sont décrites par exemple dans les brevets US-3 220 972, 3 284 406, 3 436 366, 3 697 473 et 4 340 709.

Les polyorganosiloxanes A peuvent aussi être du type de ceux qui réticulent à température ambiante par des réactions de polycondensation sous l'action de l'humidité, en présence généralement d'un catalyseur métallique, par exemple un composé de l'étain (RTV polycondensation). Les compositions mettant en oeuvre ce type de polyorganosiloxane sont décrites par exemple dans les brevets US-3 065 194, 3 542 901, 3 779 986, 4 417 042 et dans le brevet FR-2 638 752 (compositions monocomposante) et dans les brevets US-3 678 002, 3 888 815, 3 933 729 et 4 064 096 (compositions bicomposante).

Les polyorganosiloxanes A qui entrent dans ces compositions RTV polycondensation sont des polysiloxanes linéaires ramifiés ou réticulés porteurs de groupements hydroxyle ou de groupements hydrolysables par exemple alcoxy. De pareilles compositions peuvent contenir en outre un agent de réticulation, qui est, notamment, un composé portant au moins 3 groupements hydrolysables comme par exemple un silicate, un alkyltrialcoxysilane ou un aminoalkyle trialcoxysilane.

La composition silicone liquide **X** peut également comprendre un ou plusieurs polyorganosiloxanes **A** réticulables par voie cationique ou radicalaire :
- en présence d'une quantité efficace de systèmes amorceurs cationiques (amorceurs thermiques et/ou photoamorceurs) - les amorceurs du type borate d'onium ou de complexes organométalliques, les solvants organiques donneurs de protons (alcool isopropylique, alcool benzylique,..), et/ou
- selon le cas en présence d'un initiateur radicalaire, par l'intermédiaire d'une activation par rayonnement actinique (UV) ou par faisceaux d'électrons.

Ces polyorganosiloxanes sont par exemple des époxysilicones et/ou des vinyléthersilicones, linéaires ou cycliques. De tels polyorganosiloxanes époxy ou vinyloxyfonctionnels sont décrits notamment dans les brevets DE-4 009 889, EP-0 396 130, EP- 0 355 381, EP-0 105 341, FR-2 110 115, FR-2 526 800. Les polyorganosiloxanes époxy fonctionnels peuvent être préparés par réactions d'hydrosilylation entre des huiles à motifs =SiH et des composés époxy-fonctionnels tels que le 1,2-époxy-4-vinyl-4-cyclohane (VCMX) ou allyl-glycidyléther. Les polyorganosiloxanes vinyloxyfonctionnels peuvent être préparés par réaction d'hydrosilylation entre des huiles à motifs SiH et des composés vinyloxyfonctionnels tels que l'allylvinyléther ou l'allyl- vinyloxyéthoxybenzène.

Selon une variante préférée du procédé selon l'invention, la composition silicone liquide **X** précurseur de revêtement(s) silicone à laquelle on ajoute l'additif anti-brouillard **E** (« antimisting ») comprend :
- au moins un polyorganosiloxane **A** réticulable par polyaddition,
- éventuellement au moins un composé organosilicique réticulant **B,**
- au moins un catalyseur **C1** de la réaction de polyaddition;
- éventuellement au moins un système modulateur d'adhérence **K,** et
- éventuellement au moins un inhibiteur de réticulation **D;**

Selon cette variante préférée, le polyorganosiloxane **A** est du type de ceux réticulant par polyaddition et qui présente des motifs siloxyles de formule **(III)** avec éventuellement au moins une partie des autres motifs étant des motifs siloxyles de formule moyenne **(IV):** 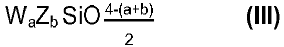 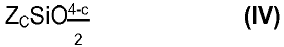 formules dans lesquelles :
- W est un groupe alcényle, de préférence vinyle ou allyle,
- les symboles Z, identiques ou différents, représentent :
   - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, et/ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles.
- a est 1 ou 2, de préférence égal à 1, b est 0, 1 ou 2 et a + b = 1, 2 ou 3, et
- c = 0, 1, 2 ou 3.

Des exemples de polyorganosiloxanes **A** réticulable par polyaddition sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle.

Le composé organosilicique réticulant **B** est de préférence du type de ceux présentant des motifs de formule **(V)** avec éventuellement au moins une partie des autres motifs étant des motifs de formule moyenne **(VI):**

H L_{c} Si O_{(3-c)/2} (**V**)

L_{g} Si O_{(4-g)/2} **(VI)**

dans lesquelles :
- les symboles L, identiques ou différents, représentent :
   - un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone éventuellement substitué, et/ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles,
   - c = 0, 1 ou 2, et
   - g= 0, 1, 2 ou 3.

Des exemples de composé organosilicique réticulant **B** sont, par exemple, :
- les polymères diméthylpolysiloxane à extrémités hydrogénodiméthylsilyle,
- les polymères poly(diméthylsiloxane) (méthylhydrogénosiloxy) α,ω-diméthythydrogéno-siloxane,
- MDD^{H} : les copolymères à motifs diméthyl-hydrogénométhylpolysiloxanes (diméthyl) à extrémités triméthylsilyle,
- M^{H}DD^{H} : les copolymères à motifs diméthyl-hydrogénométhylpolysiloxanes à extrémités hydrogénodiméthylsilyle,
- MD^{H} : les hydrogénométhylpolysiloxanes à extrémités triméthylsilyle,

Le catalyseur polyaddition **C1** est par exemple composé d'au moins un métal appartenant au groupe du platine. Ce catalyseur peut notamment être choisi parmi les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale du catalyseur de polyaddition **C1,** calculée en poids de platine-métal, est généralement comprise entre 2 et 400 ppm.

Outre ces constituants, la composition silicone liquide **X** précurseur de revêtement(s) silicone peut également contenir au moins un additif courant dans les compositions silicone réticulant par polyaddition, par polycondensation, par voie cationique ou par voie radicalaire. On peut citer par exemple, les pigments,...

Les charges **Z** sont de préférence des charges minérales. Ces charges peuvent se présenter sous la forme de produits très finement divisés; parmi ces charges figurent les silices de combustion et les silices de précipitation: leur surface spécifique est par exemple égale ou supérieure à 40 m²/g, et se situe le plus souvent dans l'intervalle 40-300 m²/g.

Ces charges **Z** peuvent également se présenter sous la forme de produits plus grossièrement divisés, de diamètre particulaire moyen par exemple supérieur à 1 µm. Comme exemples de telles charges, on peut citer le quartz broyé, les silices de diatomées, les oxydes de fer, de zinc, de magnésium, les différentes formes d'alumine (hydratée ou non) ; leur surface spécifique est par exemple égale ou inférieure à 30 m²/g.

Les charges **Z** peuvent avoir été modifiées en surface, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes. Les charges traitées renferment, dans la plupart des cas, de 2 à 20 % de leur poids de composés organosiliciques.

Les charges **Z** peuvent être constituées d'un mélange de plusieurs types de charges de granulométrie différente; ainsi par exemple, elles peuvent être constituées de 30 à 70 % de silices finement divisées de surface spécifique égale ou supérieure à 40 m²/g et de 70 à 30 % de silices plus grossièrement divisées de surface spécifique égale ou inférieure à 30 m²/g.

Un autre objet de l'invention concerne une composition silicone liquide **X** précurseur de revêtement(s) silicone comprenant :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit ci-dessus,
- éventuellement au moins un composé organosilicique réticulant **B,**
- éventuellement au moins un catalyseur ou photoamorceur **C** dont la nature est choisie suivant le type de réaction envisagée pour ledit polyorganosiloxane **A,**
- éventuellement, au moins un système modulateur d'adhérence **K,** et
- éventuellement au moins un inhibiteur de réticulation **D.**

Selon un mode de réalisation préféré, la composition silicone liquide **X** précurseur de revêtement(s) silicone comprend :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit ci-dessus,
- éventuellement au moins un composé organosilicique réticulant **B,**
- au moins un catalyseur ou photoamorceur **C** dont la nature est choisie suivant le type de réaction envisagée pour ledit polyorganosiloxane **A,**
- éventuellement, au moins un système modulateur d'adhérence **K,** et
- éventuellement au moins un inhibiteur de réticulation **D.**

Selon un autre mode de réalisation préféré, la composition silicone liquide **X** précurseur de revêtement(s) silicone comprend :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit ci-dessus,
- au moins un composé organosilicique réticulant **B,**
- au moins un catalyseur ou photoamorceur **C** dont la nature est choisie suivant le type de réaction envisagée pour ledit polyorganosiloxane **A,**
- éventuellement, au moins un système modulateur d'adhérence **K,** et
- éventuellement au moins un inhibiteur de réticulation **D.**

Selon un autre mode de réalisation préféré, la composition silicone liquide **X** précurseur de revêtement(s) silicone comprend :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit ci-dessus,
- au moins un composé organosilicique réticulant **B,**
- au moins un catalyseur ou photoamorceur **C** dont la nature est choisie suivant le type de réaction envisagée pour ledit polyorganosiloxane **A,**
- au moins un système modulateur d'adhérence **K,** et
- éventuellement au moins un inhibiteur de réticulation **D.**

Selon un autre mode de réalisation préféré, la composition silicone liquide **X** précurseur de revêtement(s) silicone comprend :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit ci-dessus,
- au moins un composé organosilicique réticulant **B,**
- au moins un catalyseur ou photoamorceur **C** dont la nature est choisie suivant le type de réaction envisagée pour ledit polyorganosiloxane **A,**
- au moins un système modulateur d'adhérence **K,** et
- au moins au moins un inhibiteur de réticulation **D.**

Le dernier objet de l'invention concerne l'utilisation de l'additif anti-brouillard **E** tel que défini ci-dessus pour réduire l'apparition de brouillard ("misting") lors de l'enduction de supports flexibles avec une composition silicone liquide **X** précurseur de revêtement(s) silicone.

Il apparaît donc que l'invention propose un moyen original simple, économique et fiable de lutte contre la production de brouillard lors de l'enduction de supports flexibles (par exemple en papier, en film ou en film polymère) dans des dispositifs d'enduction à cylindre fonctionnant à grande vitesse. La conséquence industrielle pratique est que les vitesses de défilement peuvent encore être augmentées sans qu'apparaisse ce phénomène de brouillard nuisible à la qualité de l'enduction. Le moyen de lutte proposé par l'invention a également pour avantage non négligeable de ne pas nuire aux qualités d'aspect, à la couverture, aux propriétés d'anti-adhérence, ainsi qu'aux propriétés mécaniques (rub-off) du revêtement réticulé silicone que l'on cherche à obtenir sur au moins une des faces du support flexible.

Par ailleurs, la réduction du "misting" améliore de façon significative les conditions d'hygiène et de sécurité pour le personnel en poste auprès de dispositifs industriels d'enduction silicone sur cylindres fonctionnant à grande vitesse.

Les exemples, qui suivent ont pour vocation d'illustrer des modes de réalisation particuliers de l'invention sans pour autant limiter la portée de l'invention à ces simples modes de réalisations.

### EXEMPLES

Motifs siloxyles:

M = (CH₃)₃SiO_{1/2}

Q = SiO_{4/2}

### I) Préparation des additifs anti-brouillard E :

Les viscosités sont mesurées à 25 +/- 2 °C à l'aide d'un viscosimètre *Brookfield DV-*/+ (mobile S34).

### Exemple 1 - Préparation d'un additif anti-brouillard E1 selon l'invention:

Dans un tricol de 1 litre, équipé d'une ancre et d'une entrée et sortie pour un flux d'azote, on charge 150 g d'un polydiméthylsiloxane à bout de chaînes triméthylsilyl (viscosité de 1000 mPa.s (cP) à 25°C), 72 g d'un polydiméthylsiloxane comprenant une fonction hydroxyle bout de chaîne avec une viscosité de 14000 mPa.s (cP) à 25 °C et 7.2 g d'un condensat partiellement hydrolysé de silicate d'éthyle (communément appelé polysilicate d'éthyle partiellement hydrolysé. Le mélange est agité et 0,9 g d'un catalyseur alcalin (solution de silanolate de potassium dans l'octaméthylcyclotétrasiloxane, teneur équivalent KOH de 14% en poids) sont ajoutés. Le mélange est chauffé à 130°C. L'agitation et le chauffage sont maintenus. Puis, 5 g de silice ("Aerogel® 200" de Nippon Aerogel Co ayant une surface spécifique de 200 m²/g) et 4,7 g de polydiméthylsiloxane à fonction hydroxyl bout de chaîne et une viscosité de 50 mPa.s (cP) à 25°C sont ajoutés et dispersés de manière homogène à l'aide d'un homomixer. Le chauffage est maintenu à 180°C pendant 4 heures pour finir la réaction. Le produit de réaction est ensuite refroidi à température ambiante conduisant à un additif anti-misting incolore, filant et transparent, de viscosité 2600 mPa.s (cP) à 25°C. L'ensemble du procédé est réalisé sous atmosphère d'azote.

### Exemple 2 : Préparation d'un additif anti-brouillard E2 selon l'invention

L'additif anti-brouillard est préparé en deux étapes. L'étape 1 permet d'obtenir une résine de ultra-haut poids moléculaire.

### Etape 1 :

Une résine MQ de ultra-haut poids moléculaire est préparée par réaction d'une résine MQ solide (A), de poids moléculaire (Mw) égal à 12,900 et de formule générale SiO_{1.3}(OH)_{1.28}Me_{0.12}, un polydiméthylsiloxane linéaire (B) avec des bouts de chaines =SiOH, dont la formule est HO(Me₂SiO)₁₅H et du xylène dans un tricol, équipé d'un appareillage communément appelé "Dean-Stark" et d'un condenseur. Le poids moléculaire (Mw) du composé (A) est de 12,900. Le compose (B) est préférentiellement un polydiméthylsiloxane linéaire avec des bouts de chaines ≡SiOH, dont la formule est HO(Me₂SiO)₁₅H. Le ratio en poids de (A)/(B) = 15.7/1 Le mélange réactionnel est chauffé à reflux (140°C) et avec une agitation constante pendant 24 heures, durant lesquelles de l'ammoniaque gazeux, le catalyseur, est bullé en continu dans le mélange réactionnel et l'eau produite par la réaction est éliminée par le Dean-Stark. A la fin de la réaction, le réacteur est purgé avec de l'azote et le mélange contenant le produit de réaction (1) est refroidi à température ambiante. Le Mw de la résine obtenue est de 665 000, déterminé par chromatographie d'exclusion stérique.

### Etape2 :

Dans un tricol de 2 litres, contenant 52.2 g d'un mélange à 56% de résine MQ à ultra-haut poids moléculaire dans du xylène, préparée comme décrit précédemment, 771.6 g de polydiméthylsiloxane terminé triméthylsiloxy est chargé sous agitation. Le mélange est chauffé à 180°C sous agitation à 5320 Pa pendant 1 heure pour éliminer le xylène. Le mélange est ensuite refroidi à 90°C avant d'ajouter 384 g de polydiméthylsiloxane terminé silanol (3) et 1.8 g d'une solution de KOH dans l'isopropanol (1.7 moles KOH par litre de solution). Le mélange est chauffé à 90°C et sous 5330 Pa jusqu'à ce que la viscosité souhaitée soit obtenue. A la fin de la réaction, le catalyseur KOH est neutralisé par 0.18 g d'acide acétique dans 1.92 g d'eau et le mélange est agité pendant 0.5 heure pendant qu'il est refroidi à température ambiante. Le produit obtenu est filant et a une viscosité de 31800 mPa.s (cP) à 25°C. Puis, 35 g de silice TS-350 (silice pyrogénée traitée l'hexaméthyldisilazane ou HMDZ fourni par la société Cabot Corp.) sont ajoutés et dispersés de manière homogène à l'aide d'un homomixer.

### Exemple 3 : Préparation d'un additif anti-brouillard E3 selon l'invention:

Dans un tricol d'un litre, muni d'un agitateur et d'un système de balayage d'azote, on charge 280 g d'un polydimethylsiloxane à bout de chaîne triméthylsilyl d'une viscosité de 100 mPa.s à 25 °C, 505 g d'un polydimethylsiloxane à bout de chaîne hydroxyle d'une viscosité de 14 000 mPa.s à 25°C et 165 g d'un polysiloxane mixte, contenant environ 31% d'une résine MQ, dont la teneur en OH est de 0.7% poids. Le mélange est agité puis 30,7 g d'un catalyseur alcalin (solution de silanolate de potassium dans l'octaméthylcyclotétrasiloxane, teneur équivalent KOH de 14% en poids) sont ajoutés. L'agitation est maintenue pendant 45 minutes puis 38,4 g de silice (Tixosil-365®, silice précipitée fournie par la société Rhodia) sont ajoutés et dispersés de manière uniforme à l'aide d'un homomixer. Le mélange est ensuite chauffé à 160°C pendant une heure pour terminer la réaction puis refroidi à température ambiante. Un produit filant est obtenu avec une viscosité de ∼ 70000 mPa.s (cP) à 25°C. Afin de limiter les problèmes d'augmentation de viscosité au stockage, le produit peut être neutralisé avec de l'acide acétique ou de AcOH ou une solution d'acide phosphorique dans du polydiméthylsiloxane ou dilué dans un polysiloxane non réactif.

### Exemple 4 : Préparation d'un additif anti-brouillard E4 selon l'invention:

Dans un tricol d'1 litre, muni d'un agitateur et d'un système de balayage d'azote, on charge 280 g d'un polydiméthylsiloxane à bout de chaîne triméthylsilyl d'une viscosité de 100 mPa.s (cP) à 25 °C, 505 g d'un polydiméthylsiloxane à bout de chaîne hydroxyl d'une viscosité de 14 000 mPa.s (cP) à 25°C et 165 g d'un polysiloxane mixte, contenant environ 31% d'une résine MQ, dont la teneur en OH est de 0.7% poids. Le mélange est agité et 0,76 g d'un catalyseur alcalin (solution de silanolate de potassium dans l'octaméthylcyclotétrasiloxane, teneur équivalent KOH de 14% en poids) sont ajoutés. Le mélange est chauffé à 110°C jusqu'à la viscosité souhaitée puis le catalyseur KOH est neutralisé avec une solution d'acide phosphorique dans du polydiméthylsiloxane. Un produit transparent et filant est obtenu avec une viscosité de 68000 mPa.s (cP) à 25°C.

### Exemple 5 : Préparation d'un additif anti-brouillard E5 selon l'invention:

Dans un tricol de 350 mL, muni d'un agitateur et d'un système de balayage d'azote, on charge 161 g d'un polydiméthylsiloxane à bout de chaîne hydroxyle d'une viscosité de 14 000 mPa.s (cP) à 25°C et 13,6 g d'un polysiloxane mixte, contenant environ 31% d'une résine MQ, dont la teneur en OH est de 0.7% poids. Le mélange est agité et 0,024 g d'un catalyseur alcalin (solution de silanolate de potassium dans l'octaméthylcyclotétrasiloxane, teneur équivalent KOH de 14% en poids) sont ajoutés. Le mélange est chauffé à 130°C jusqu'à la viscosité souhaitée puis le catalyseur KOH est neutralisé avec une solution d'acide phosphorique dans du polydiméthylsiloxane. Un produit filant et transparent est obtenu avec une viscosité de 91000 mPa.s (cP) à 25°C.

### Exemple 6 : Préparation d'un additif anti-brouillard E6 selon l'invention:

Dans un tricol de 350 mL, muni d'un agitateur et d'un système de balayage d'azote, on charge 108 g d'un polydiméthylsiloxane à bout de chaîne hydroxyle d'une viscosité de 3500 mPa.s (cP) à 25°C et 67 g d'un polysiloxane mixte, contenant environ 31% d'une résine MQ, dont la teneur en OH est de 0.7% poids. Le mélange est agité et 0,051 g d'un catalyseur alcalin (solution de silanolate de potassium dans l'octaméthylcyclotétrasiloxane, teneur équivalent KOH de 14% en poids) sont ajoutés. Le mélange est chauffé à 110°C jusqu'à la viscosité souhaitée puis le catalyseur KOH est neutralisé avec une solution d'acide phosphorique dans du polydiméthylsiloxane. Un produit filant et transparent est obtenu avec une viscosité de 100000 mPa.s (cP) à 25°C.

### II) Test comme additif anti-misting

Les additifs anti-brouillard **E1** à **E6** préparés dans la partie I) ont été testés pour l'application anti-misting. Les résultats observés sont rassemblés dans les tableaux suivants, en quantité de "misting" (brouillard) mesuré (mg/m3) ou sous forme de ratio de « misting » mesuré avec additif et sans additif pour différentes vitesses de rotation des rouleaux.

### Description du test

Pour analyser et quantifier le brouillard produit dans un dispositif d'enduction à cylindres fonctionnant à grande vitesse, on a mis en oeuvre à l'échelle du laboratoire un dispositif (fourni par la société Ermap, France) à 2 rouleaux fonctionnant de manière reproductible et apte à faire défiler une bande de papier à une vitesse linéique de plus de 900m/min. Les deux cylindres presseur/enducteur présentent un diamètre de 10 cm. Le cylindre presseur est recouvert de caoutchouc et le cylindre enducteur de chrome. Le cylindre enducteur a été taillé en haltère de sorte que la vitesse des deux cylindres soient synchrones. Le cylindre presseur entrainable par un moteur, est en contact sous pression constante avec le cylindre enducteur. Le liquide silicone d'enduction est versé directement dans l'entrefer entre les deux rouleaux. La quantité de fluide utilisée est 0,25 ml.

Différentes compositions ont ensuite été préparés en mélangeant un polymère silicone **A1** (polydiméthylsiloxane dont les extrémités sont bloquées par un groupe diméthylvinylsiloxy dont la viscosité est de 220 mPa.s) et les produits décrits ci-dessus dans les exemples 1 à 6 à raison de 1 à 4 parties en poids de produit dans 100 parties en poids de polymère. Les compositions sont homogénéïsées au roule-fût le temps nécessaire. On utilise ensuite le système rotatif décrit ci-dessus sur les rouleaux sur lesquels est étalée la préparation en question. On augmente ensuite progressivement la vitesse de rotation des rouleaux. Parallèlement, on mesure la densité du brouillard en disposant à proximité du lieu de contact, entre les cylindres, un instrument de mesure appelé compteur de particules commercialisé la société ITS (France). Le résultat de la mesure de densité de brouillard est exprimé en mg d'aérosol silicone par m³ d'air à une vitesse de mesure donnée.

Le tableau ci-dessous rassemble les résultats obtenus:

**Tableau II : Résultats des tests anti-misting en valeur absolue**

| Additif anti-misting | % poids additif | Misting (mg/m³) à 600m/min | Misting (mg/m³) à 800 m/min | Misting (mg/m³) à 870 m/min |
|---|---|---|---|---|
| Référence sans additif (comparatif) | 0 | 21 | 63 | 73 |
| Exemple 2 (invention) | 2 | 1 | 5 | 15 |
| Exemple 3 (invention) | 2 | 1,7 | 8 | 15 |
| Exemple 4 (invention) | 1 | 1 | 6 | 14 |
| Exemple 5 (invention) | 1 | 1 | 8 | 17 |
| Exemple 6 (invention) | 1 | 2,5 | 10 | 24 |

L'additif E1 selon l'Exemple 1 donne de bons résultats similaires aux additifs testés E2 à E6.

### Préparation d'un revêtement silicone anti-adhérent sur un support papier

Les bains sont obtenus en mélangeant successivement les produits suivants:
- un polymère silicone de polydiméthylsiloxane dont les extrémités sont bloquées par un groupe diméthylvinylsiloxy dont la viscosité est de 220 mPa.s,
- l'additif selon l'invention (exemples 2, 3 et 4),
- un mélange d'huiles constituées de copolymères de polyhydrogénométhylsiloxane et de polydiméthylsiloxane, les deux types de copolymères étant bloqués par des groupes triméthylsiloxane,
- un catalyseur contenant du Pt (catalyseur de Karsted) et mis en solution dans du divinyltétraméthyldisiloxane.

Les proportions du mélange sont calculées de sorte que l'on obtienne dans le bain final un rapport entre le nombre total en moles de groupements vinyles et le nombre total en mole de groupements hydrogénosiloxane de 1.8, une concentration en platine de 50 ppm et un taux d'éthynylcyclohexanol-1 de l'ordre de 0.15% en poids par rapport au poids de la formulation. Par ailleurs, l'additif anti-misting selon l'invention est ajouté au polymère silicone de polydiméthylsiloxane dont les extrémités sont bloquées par un groupe diméthylvinylsiloxy et dont la viscosité est de 220 mPa.s dans une proportion de 1 /ou 2% en poids par rapport au poids total de la formulation. Ces bains sont ensuite utilisés successivement pour enduire un support de papier appelé "glassine" au moyen d'une machine d'enduction dont la tête d'enduction est une tête munie de quatre cylindres humides. En aval de cette tête, une sécherie dans laquelle circule de l'air à 195°C environ est utilisée pour faire durcir l'enduit de silicone en le portant à une température maximale comprise entre 130 et 160°C.

Après avoir procédé à l'opération d'enduction en utilisant successivement les bains décrits ci-dessus, on obtient des résultats comparables quand à la réduction du brouillard lors de l'enduction tout en obtenant un revêtement au toucher sec et au caractère anti-adhérent.

## Revendications

1. Procédé de lutte contre l'apparition de brouillard ("misting") lors de l'enduction de supports flexibles comprenant les étapes **I)** et **II)** suivantes :
**I)** la préparation d'une composition silicone liquide **X** précurseur de revêtement(s) silicone comprenant :
- au moins un polyorganosiloxane **A** réticulable par polyaddition, par déshydrogénocondensation, par polycondensation, par voie cationique ou par voie radicalaire,
- éventuellement au moins un composé organosilicique réticulant **B,**
- éventuellement au moins un catalyseur ou photoamorceur **C** dont la nature est choisie suivant le type de réaction envisagée pour ledit polyorganosiloxane **A,**
- éventuellement, au moins un système modulateur d'adhérence **K,** et
- éventuellement au moins un inhibiteur de réticulation **D;** et
**II)** l'enduction de ladite composition silicone liquide **X** sur un support flexible à l'aide d'un dispositif d'enduction à cylindres,
ledit procédé étant **caractérisé en ce qu'**à l'étape **I)** on ajoute à ladite composition silicone liquide **X** un additif anti-brouillard **E** (additif « antimisting ») ayant les caractéristiques suivantes :
- il se présente sous une forme liquide, éventuellement suite à une dilution à l'aide d'un diluant **J',** d'un solvant **J"** ou dans un des constituants de la dite composition silicone liquide **X,** et
- il est susceptible d'être obtenu :
1) en faisant réagir, de préférence à une température comprise entre 0°C et 200°C un ou plusieurs composés choisis parmi les composés a) à d) suivants :
a) une résine organosilicique **F** (éventuellement diluée à l'aide d'un diluant **J'**, d'un solvant **J"** ou dans un des constituants de la dite composition silicone liquide **X**) comprenant dans sa structure, au moins deux motifs siloxyles différents choisis parmi ceux de formule:
- (R¹)₃SiO_{1/2} (motif M),
- (R¹)₂SiO_{2/2} (motif D),
- R¹SiO_{3/2} (motif T), et
- SiO_{4/2} (motif Q),
motifs dans lesquels:
- les radicaux R¹, identiques ou différents, sont choisis parmi les radicaux alkyles linéaires ou ramifiés en C₁ à C₆, les radicaux alcényles en C₂ à C₄, phényle, trifluoro-3,3,3 propyle, avec comme conditions:
- que l'un au moins de ces motifs est un motif T ou Q, et
- que ladite résine organosilicique **F** comprend des groupes ≡SiOH et/ou =SiOR², la teneur pondérale en groupes OH et/ou OR² étant comprise entre 0,2 et 10 % en poids, avec R² étant un radical alkyle linéaire ou ramifié en C₁ à C₆,
b) un composé organosilicié **N** de formule générale:
R³_{d}Si X_{4-d}
dans laquelle R³ est un groupe hydrocarboné monovalent ayant de 1 à 5 atomes de carbone, X est un groupe hydrolysable et d a une valeur moyenne ≤ 1;
c) un condensat **L** partiellement hydrolysé dudit organosilicié N;
d) un condensat **M** de ladite résine organosilicique **F** avec ledit composé organosilicié **N** ou ledit condensat **L** ;
- avec:
e) au moins un monomère, oligomère et/ou polymère organosiloxane G de formule: 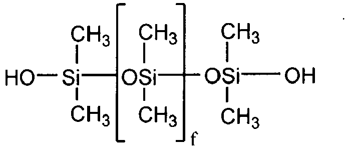 dans laquelle: 1 ≤ f ≤ 2000, de préférence 1 ≤ f ≤ 1000.
- en présence :
- d'au moins un catalyseur de polycondensation **H,**
- d'éventuellement une charge **Z,** et
- d'éventuellement au moins un diluant **J'** ou un solvant **J",** et
2) en isolant l'additif anti-brouillard **E,** éventuellement après élimination du catalyseur de condensation **H** et/ou dévolatilisation et/ou neutralisation.

2. Procédé de lutte contre l'apparition de brouillard ("misting") lors de l'enduction de supports flexibles selon la revendication 1 dans lequel le composé organosilicié **N** est choisi parmi le groupe constitué par: CH₃Si(OCH₃)₃, CH₃Si(OC₂H₅)₃, (CH₂= CH)Si(OCH₃)₃, Si(OC₂H₅)₄, Si(OC₃H₇)₄, (CH₂= CH)Si(OC₂H₅)₃ et Si(OC₂H₄ OC₂H₅)₄.

3. Procédé de lutte contre l'apparition de brouillard ("misting") lors de l'enduction de supports flexibles selon la revendication 1 dans lequel ladite composition silicone liquide **X** précurseur de revêtement(s) silicone à laquelle on ajoute l'additif anti-brouillard **E** (« antimisting ») tel que défini selon l'une quelconque des revendications précédentes, comprend :
- au moins un polyorganosiloxane **A** réticulable par polyaddition,
- au moins un composé organosilicique réticulant **B,**
- au moins un catalyseur **C1** de la réaction de polyaddition;
- éventuellement au moins un système modulateur d'adhérence **K,** et
- éventuellement au moins un inhibiteur de réticulation **D.**

4. Procédé de lutte contre l'apparition de brouillard ("misting") lors de l'enduction de supports flexibles selon la revendication 3 **caractérisé en ce que** le polyorganosiloxane **A** réticulable par polyaddition présente des motifs de formule (**III**) et éventuellement au moins une partie des autres motifs sont des motifs de formule moyenne **(IV):** 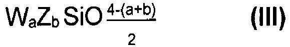 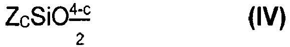 formules dans lesquelles :
- W est un groupe alcényle, de préférence vinyle ou allyle,
- les symboles Z, identiques ou différents, représentent :
- un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
- un radical cycloalkyle contenant entre 5 et 8 atomes de carbone cycliques, éventuellement substitué,
- un radical aryle contenant entre 6 et 12 atomes de carbone éventuellement substitué, et/ou
- une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles.
- a est 1 ou 2, de préférence égal à 1, b est 0, 1 ou 2 et a + b = 1, 2 ou 3, et
- c = 0, 1, 2 ou 3.

5. Procédé de lutte contre l'apparition de brouillard ("misting") lors de l'enduction de supports flexibles selon la revendication 3 **caractérisé en ce que** le composé organosilicique réticulant **B** présente des motifs de formule **(V)** et éventuellement au moins une partie des autres motifs sont des motifs de formule moyenne **(VI):**
H L_{c} Si 0(3-c)/2 **(V)**
L_{g} Si O_{(4-g)/2} **(VI)**
dans lesquelles :
- les symboles L, identiques ou différents, représentent :
- un radical alkyle linéaire ou ramifié contenant 1 à 20 atomes de carbone, éventuellement substitué par au moins un halogène, de préférence le fluor, les radicaux alkyles étant de préférence méthyle, éthyle, propyle, octyle et 3,3,3-trifluoropropyle,
- un radical cycloalkyle contenant entre 5 et 8 atomes de carbone cycliques, éventuellement substitué,
- un radical aryle contenant entre 6 et 12 atomes de carbone éventuellement substitué, et/ou
- une partie aralkyle ayant une partie alkyle contenant entre 5 et 14 atomes de carbone et une partie aryle contenant entre 6 et 12 atomes de carbone, substituée éventuellement sur la partie aryle par des halogènes et/ou des alkyles,
- c = 0, 1 ou 2, et
- g= 0, 1, 2 ou 3.

6. Composition silicone liquide **X** précurseur de revêtement(s) silicone comprenant :
- au moins un polyorganosiloxane **A** réticulable par polyaddition, par déshydrogénocondensation, par polycondensation, par voie cationique ou par voie radicalaire,
- au moins un additif anti-brouillard **E** (« antimisting ») tel que décrit selon l'une des revendications précédentes,
- éventuellement au moins un composé organosilicique réticulant **B,**
- éventuellement au moins un catalyseur ou photoamorceur **C** dont la nature est choisie suivant le type de réaction envisagée pour ledit polyorganosiloxane **A,**
- éventuellement, au moins un système modulateur d'adhérence **K,** et
- éventuellement au moins un inhibiteur de réticulation **D;**

7. Utilisation de l'additif anti-brouillard **E** tel que défini selon l'une quelconque des revendications 1 à 2 pour réduire l'apparition de brouillard ("misting") lors de l'enduction de supports flexibles avec une composition silicone liquide **X** précurseur de revêtement(s) silicone.

## Patentansprüche

1. Verfahren zur Bekämpfung des Auftretens von Nebel ("Misting") bei der Beschichtung von flexiblen Trägern, das die folgenden Schritte **I)** und **II)** umfasst:
**I)** Herstellung einer flüssigen Silikonzusammensetzung **X,** die eine Silikonüberzugsvorstufe ist, umfassend:
- mindestens ein Polyorganosiloxan **A,** das durch Polyaddition, Dehydrokondensation, Polykondensation, kationisch oder radikalisch vernetzbar ist,
- gegebenenfalls mindestens eine vernetzende Organosiliciumverbindung **B,**
- gegebenenfalls mindestens einen Katalysator oder Photoinitiator **C,** dessen Beschaffenheit gemäß dem Typ der für das Polyorganosiloxan **A** vorgesehenen Reaktion gewählt wird,
- gegebenenfalls mindestens ein haftungsmodulierendes System **K** und
- gegebenenfalls mindestens einen Vernetzungsinhibitor **D;** und
**II)** Auftragen der flüssigen Silikonzusammensetzung **X** auf einen flexiblen Träger mit Hilfe eines Walzenauftragswerks,
wobei das Verfahren **dadurch gekennzeichnet ist, dass** man in Schritt **I)** der flüssigen Silikonzusammensetzung **X** ein Antinebeladditiv **E** ("Anti-misting"-Additiv) mit den folgenden Eigenschaften zusetzt:
- es liegt in flüssiger Form vor, gegebenenfalls nach Verdünnung mit einem Verdünnungsmittel **J',** einem Lösungsmittel **J"** oder in einem der Bestandteile der flüssigen Silikonzusammensetzung **X,** und
- es ist erhältlich:
1) durch Umsetzung von einer oder mehreren Verbindungen, die aus den folgenden Verbindungen a) bis d) ausgewählt sind, vorzugsweise bei einer Temperatur zwischen 0 °C und 200 °C:
a) einem Organosiliciumharz **F** (gegebenenfalls nach Verdünnung mit einem Verdünnungsmittel **J',** einem Lösungsmittel **J'**' oder in einem der Bestandteile der flüssigen Silikonzusammensetzung **X**), das in seiner Struktur mindestens zwei verschiedene Siloxyl-Einheiten umfasst, die aus denjenigen der Formel:
- (R¹)₃SiO_{1/2} (M-Einheit),
- (R¹)₂SiO_{2/2} (D-Einheit),
- R¹SiO_{3/2} (T-Einheit) und
- SiO_{4/2} (Q-Einheit),
ausgewählt sind, wobei in den Einheiten:
- die Reste R¹, die gleich oder verschieden sind, aus linearen oder verzweigten C₁- bis C₆-Alkylresten, C₂- bis C₄-Alkenylresten, Phenylresten und 3,3,3-Trifluorpropylresten ausgewählt sind, mit den folgenden Maßgaben:
- dass mindestens eine dieser Einheiten eine T- oder Q-Einheit ist und
- dass das Organosiliciumharz **F** ≡SiOH- und/oder ≡SiOR²-Gruppen umfasst, wobei der Gewichtsanteil an OH- und/oder OR²-Gruppen zwischen 0,2 und 10 Gew.-% liegt, wobei R² für einen linearen oder verzweigten C₁-bis C₆-Alkylrest steht,
b) einer Organosiliciumverbindung **N** der allgemeinen Formel:
R³_{d}SiX_{4-d}
in der R³ für eine einwertige Kohlenwasserstoffgruppe mit 1 bis 5 Kohlenstoffatomen steht, X für eine hydrolysierbare Gruppe steht und d einen durchschnittlichen Wert ≤ 1 hat;
c) einem teilweise hydrolysierten Kondensat **L** der Organosiliciumverbindung **N;**
d) einem Kondensat **M** des Organosiliciumharzes **F** mit der Organosiliciumverbindung **N** oder dem Kondensat **L;**
- mit:
e) mindestens einem Organosiloxanmonomer, -oligomer und/oder -polymer **G** der Formel: 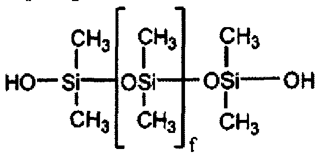 in der: 1 ≤ f ≤ 2000, vorzugsweise 1 ≤ f ≤ 1000;
- in Gegenwart:
- von mindestens einem Polykondensationskatalysator **H,**
- von gegebenenfalls einem Füllstoff **Z** und
- von gegebenenfalls mindestens einem Verdünnungsmittel **J'** oder Lösungsmittel **J",** und
2) durch Isolierung des Antinebeladditivs **E,** gegebenenfalls nach Entfernung des Kondensationskatalysators **H** und/oder Entgasung und/oder Neutralisation.

2. Verfahren zur Bekämpfung des Auftretens von Nebel ("Misting") bei der Beschichtung von flexiblen Trägern nach Anspruch 1, bei dem die Organosiliciumverbindung **N** aus der Gruppe bestehend aus CH₃Si(OCH₃)₃, CH₃Si(OC₂H₅)₃, (CH₂=CH)Si(OCH₃)₃, Si(OC₂H₅)₄, Si(OC₃H₇)₄, (CH₂=CH)Si(OC₂H₅)₃ und Si(OC₂H₄OC₂H₅)₄ ausgewählt wird.

3. Verfahren zur Bekämpfung des Auftretens von Nebel ("Misting") bei der Beschichtung von flexiblen Trägern nach Anspruch 1, bei dem die flüssige Silikonzusammensetzung **X,** die eine Silikonüberzugsvorstufe ist, der man das Antinebeladditiv **E** ("Antimisting"-Additiv) gemäß einem der vorhergehenden Ansprüche zusetzt, Folgendes umfasst:
- mindestens ein Polyorganosiloxan **A,** das durch Polyaddition vernetzbar ist,
- mindestens eine vernetzende Organosiliciumverbindung **B,**
- mindestens einen Katalysator **C1** für die Polyaddition,
- gegebenenfalls mindestens ein haftungsmodulierendes System **K** und
- gegebenenfalls mindestens einen Vernetzungsinhibitor **D.**

4. Verfahren zur Bekämpfung des Auftretens von Nebel ("Misting") bei der Beschichtung von flexiblen Trägern nach Anspruch 3, **dadurch gekennzeichnet, dass** das Polyorganosiloxan **A,** das durch Polyaddition vernetzbar ist, Einheiten der Formel **(III)** aufweist und es sich gegebenenfalls bei mindestens einem Teil der anderen Einheiten um Einheiten der durchschnittlichen Formel **(IV)** handelt: 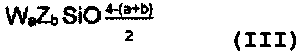 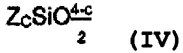 wobei in den Formeln:
- W für eine Alkinylgruppe, vorzugsweise Vinyl oder Allyl, steht,
- die Symbole Z, die gleich oder verschieden sind, für:
- einen linearen oder verzweigten Alkylrest mit 1 bis 20 Kohlenstoffatomen, der gegebenenfalls durch mindestens ein Halogen, vorzugsweise Fluor, substituiert ist, wobei es sich bei den Alkylresten vorzugsweise um Methyl, Ethyl, Propyl, Octyl und 3,3,3-Trifluorpropyl handelt,
- einen Cycloalkylrest mit zwischen 5 und 8 Ringkohlenstoffatomen, der gegebenenfalls substituiert ist,
- einen Arylrest mit zwischen 6 und 12 Kohlenstoffatomen, der gegebenenfalls substituiert ist, und/oder
- eine Aralkylgruppierung mit einem Alkylteil mit zwischen 5 und 14 Kohlenstoffatomen und einem Arylteil mit zwischen 6 und 12 Kohlenstoffatomen, die gegebenenfalls am Arylteil durch Halogene und/oder Alkylgruppen substituiert ist, stehen,
- a für 1 oder 2 steht und vorzugsweise gleich 1 ist, b für 0, 1 oder 2 steht und a + b = 1, 2 oder 3 und
- c = 0, 1, 2 oder 3.

5. Verfahren zur Bekämpfung des Auftretens von Nebel ("Misting") bei der Beschichtung von flexiblen Trägern nach Anspruch 3, **dadurch gekennzeichnet, dass** die vernetzende Organosiliciumverbindung **B** Einheiten der Formel **(V)** aufweist und es sich gegebenenfalls bei mindestens einem Teil der anderen Einheiten um Einheiten der durchschnittlichen Formel **(VI)** handelt:
HL_{c}SiO_{(3-c)/2} **(V)**
L_{g}SiO_{(4-g)/2} **(VI)**
in denen:
- die Symbole L, die gleich oder verschieden sind, für:
- einen linearen oder verzweigten Alkylrest mit 1 bis 20 Kohlenstoffatomen, der gegebenenfalls durch mindestens ein Halogen, vorzugsweise Fluor, substituiert ist, wobei es sich bei den Alkylresten vorzugsweise um Methyl, Ethyl, Propyl, Octyl und 3,3,3-Trifluorpropyl handelt,
- einen Cycloalkylrest mit zwischen 5 und 8 Ringkohlenstoffatomen, der gegebenenfalls substituiert ist,
- einen Arylrest mit zwischen 6 und 12 Kohlenstoffatomen, der gegebenenfalls substituiert ist, und/oder
- eine Aralkylgruppierung mit einem Alkylteil mit zwischen 5 und 14 Kohlenstoffatomen und einem Arylteil mit zwischen 6 und 12 Kohlenstoffatomen, die gegebenenfalls am Arylteil durch Halogene und/oder Alkylgruppen substituiert ist, stehen,
- c = 0, 1 oder 2 und
- g = 0, 1, 2 oder 3.

6. Flüssige Silikonzusammensetzung **X,** die eine Silikonüberzugsvorstufe ist, umfassend:
- mindestens ein Polyorganosiloxan **A,** das durch Polyaddition, Dehydrokondensation, Polykondensation, kationisch oder radikalisch vernetzbar ist,
- mindestens ein Antinebeladditiv **E** ("Anti-misting"-Additiv) gemäß einem der vorhergehenden Ansprüche,
- gegebenenfalls mindestens eine vernetzende Organosiliciumverbindung **B,**
- gegebenenfalls mindestens einen Katalysator oder Photoinitiator **C,** dessen Beschaffenheit gemäß dem Typ der für das Polyorganosiloxan **A** vorgesehenen Reaktion gewählt wird,
- gegebenenfalls mindestens ein haftungsmodulierendes System **K** und
- gegebenenfalls mindestens einen Vernetzungsinhibitor **D.**

7. Verwendung des Antinebeladditivs **E** gemäß einem der Ansprüche 1 bis 2 zur Verringerung des Auftretens von Nebel ("Misting") bei der Beschichtung von flexiblen Trägern mit einer flüssigen Silikonzusammensetzung **X,** die eine Silikonüberzugsvorstufe ist.

## Claims

1. Method of controlling misting when coating flexible supports, comprising steps I) and II) below:
I) preparing a liquid silicone composition **X** which is a precursor of silicone coating(s) and comprises:
- at least one polyorganosiloxane **A** crosslinkable by polyaddition, by dehydrocondensation, by polycondensation, cationically or free-radically,
- optionally at least one crosslinking organosilicon compound **B,**
- optionally at least one catalyst or photoinitiator **C** of a kind selected according to the type of reaction envisaged for said polyorganosiloxane **A,**
- optionally at least one adhesion modulator system **K,** and
- optionally at least one crosslinking inhibitor **D;** and
(II) coating said liquid silicone composition **X** onto a flexible support by means of a roll coating device,
said method being **characterized in that** in step **I)** said liquid silicone composition **X** is admixed with an antimisting additive **E** which has the following characteristics:
- it is in a liquid form, optionally following dilution by means of a diluent **J',** a solvent **J",** or in one of the constituents of said liquid silicone composition **X,** and
- it is obtainable:
1) by reacting, preferably at a temperature of between 0°C and 200°C, one or more compounds selected from compounds a) to d) below:
a) an organosilicon resin **F** (optionally diluted by means of a diluent **J',** a solvent **J",** or in one of the constituents of said liquid silicone composition **X**) comprising in its structure at least two different siloxy units selected from those of formula:
- (R¹)₃SiO_{1/2} (M unit),
- (R¹)₂SiO_{2/2} (D unit),
- R¹SiO_{3/2} (T unit), and
- SiO_{4/2} (Q unit),
in which units:
- the radicals R¹, which are identical or different, are selected from linear or branched C₁ to C₆ alkyl radicals, C₂ to C₄ alkenyl radicals, and 3,3,3-trifluoropropyl, with the following conditions:
- that at least one of these units is a T or Q unit, and
- that said organosilicon resin **F** comprises groups =SiOH and/or =SiOR², the amount by weight of groups OH and/or OR² being between 0.2% and 10% by weight, with R² being a linear or branched C₁ to C₆ alkyl radical,
b) an organosilicon compound **N** of general formula:
R³_{d}SiX_{4-d}
in which R³ is a monovalent hydrocarbon group having 1 to 5 carbon atoms, X is a hydrolyzable group, and d has an average value ≤ 1;
c) a partially hydrolyzed condensate **L** of said organosilicon compound N;
d) a condensate **M** of said organosilicon resin **F** with said organosilicon compound **N** or said condensate **L;**
- with:
e) at least one organosiloxane monomer, oligomer and/or polymer **G** of formula: 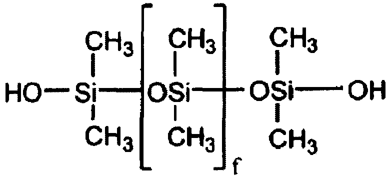 in which: 1 ≤ f ≤ 2000, preferably 1 ≤ f ≤ 1000,
- in the presence:
- of at least one polycondensation catalyst **H,**
- optionally of a filler **Z,** and
- optionally of at least one diluent **J'** or solvent **J",** and
2) by isolating the antimisting additive **E,** optionally after removal of the condensation catalyst **H,** and/or devolatilization and/or neutralization.

2. Method of controlling misting when coating flexible supports of Claim 1, wherein the organosilicon compound **N** is selected from the group consisting of: CH₃Si (OCH₃)₃, CH₃Si (OC₂H₅)₃, (CH₂=CH) Si (OCH₃)₃, Si (OC₂H₅)₄, Si (OC₃H₇)₄, (CH₂=CH) Si (OC₂H₅)₃, and Si (OC₂H₄OC₂H₅)₄.

3. Method of controlling misting when coating flexible supports of Claim 1, wherein said liquid silicone composition **X** which is a precursor of silicone coating(s) and which is admixed with the antimisting additive **E** as defined in any of the preceding claims comprises:
- at least one polyorganosiloxane **A** crosslinkable by polyaddition,
- at least one crosslinking organosilicon compound **B,**
- at least one catalyst **C1** of the polyaddition reaction,
- optionally at least one adhesion modulator system **K,** and
- optionally at least one crosslinking inhibitor **D.**

4. Method of controlling misting when coating flexible supports of Claim 3, **characterized in that** the polyorganosiloxane **A** crosslinkable by polyaddition has units of formula **(III)** and optionally at least some of the other units are units of average formula **(IV):** 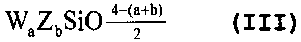 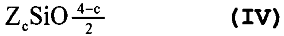 in which formulae:
- W is an alkenyl group, preferably vinyl or allyl,
- the symbols Z, which are identical or different, represent:
- a linear or branched alkyl radical which contains 1 to 20 carbon atoms and is optionally substituted by at least one halogen, preferably fluorine, the alkyl radicals being preferably methyl, ethyl, propyl, octyl, and 3,3,3-trifluoropropyl,
- a cycloalkyl radical which contains between 5 and 8 cyclic carbon atoms and is optionally substituted,
- an aryl radical which contains between 6 and 12 carbon atoms and is optionally substituted, and/or
- an aralkyl moiety which has an alkyl moiety containing between 5 and 14 carbon atoms and an aryl moiety containing between 6 and 12 carbon atoms, and is optionally substituted on the aryl moiety by halogens and/or alkyls,
- a is 1 or 2, preferably 1, b is 0, 1 or 2, and a + b = 1, 2 or 3, and
- c = 0, 1, 2 or 3.

5. Method of controlling misting when coating flexible supports of Claim 3, **characterized in that** the crosslinking organosilicon compound **B** has units of formula **(V)** and optionally at least some of the other units are units of average formula **(VI) :**
HL_{c}SiO_{(3-c)/2} **(V)**
L_{g}SiO_{(4-g)/2} **(VI)**
in which:
- the symbols L, which are identical or different, represent:
- a linear or branched alkyl radical which contains 1 to 20 carbon atoms and is optionally substituted by at least one halogen, preferably fluorine, the alkyl radicals being preferably methyl, ethyl, propyl, octyl, and 3,3,3-trifluoropropyl,
- a cycloalkyl radical which contains between 5 and 8 cyclic carbon atoms and is optionally substituted,
- an aryl radical which contains between 6 and 12 carbon atoms and is optionally substituted, and/or
- an aralkyl moiety which has an alkyl moiety containing between 5 and 14 carbon atoms and an aryl moiety containing between 6 and 12 carbon atoms, and is optionally substituted on the aryl moiety by halogens and/or alkyls,
- c = 0, 1 or 2, and
- g = 0, 1, 2 or 3.

6. Liquid silicone composition **X** which is a precursor of silicone coating(s) and comprises:
- at least one polyorganosiloxane **A** crosslinkable by polyaddition, by dehydrocondensation, by polycondensation, cationically or free-radically,
- at least one antimisting additive **E** as described in any of the preceding claims,
- optionally at least one crosslinking organosilicon compound **B,**
- optionally at least one catalyst or photoinitiator **C** of a kind selected according to the type of reaction envisaged for said polyorganosiloxane **A,**
- optionally at least one adhesion modulator system **K,** and
- optionally at least one crosslinking inhibitor **D.**

7. Use of the antimisting additive **E** as defined in any of Claims 1 to 2 to reduce misting when coating flexible supports with a liquid silicone composition **X** which is a precursor of silicone coating(s) .
